# DEMANDE DE BREVET EUROPEEN

(11) **EP 0 615 274 A1**
(43) Date de publication de la demande: **14.09.1994**
(21) Numéro de dépôt: 94400501.6
(22) Date de dépôt: 08.03.1994
(51) Int. Cl.: H01J 47/06, G01T 1/29

(54) **Dispositif d'imagerie de particules ionisantes au moyen d'une chambre proportionnelle multifils**

(30) Priorité: 11.03.1993 FR 9302817
(71) Demandeur: BIOSPACE INSTRUMENTS, F-75013 Paris (FR)
(72) Inventeur: Charpak, Georges, F-75020 Paris (FR)
(74) Mandataire: Fréchède, Michel

(57) **Abrégé**

L'invention concerne un dispositif d'imagerie de particules ionisantes.

Il comprend une chambre remplie d'un gaz de structure asymétrique formée par successivement une fenêtre d'entrée (2) des particules portée à un potentiel V2 négatif, une électrode d'anode (3) multifils portée à un potentiel V3 positif par rapport à un potentiel de référence, et une électrode de cathode (4) placée au voisinage de l'électrode d'anode (3). L'électrode de cathode portée au potentiel de référence est formée par un réseau de bandes électriquement conductrices parallèles (4k). La détection de la position d'impact de la particule ionisante, selon le pas du réseau, est effectuée par induction d'une impulsion électrique retardée provoquée par une avalanche des électrons d'ionisation, issus de la particule ionisante au niveau de la bande située au droit de l'impact de la particule dans la chambre, le temps de référence étant celui des électrons d'ionisation produits près des fils.

Application à l'électrophorèse monodimensionnelle.

## Description

L'invention concerne un dispositif d'imagerie de particules ionisantes au moyen d'une chambre proportionnelle multifils.

Il existe à l'heure actuelle de nombreuses applications pour lesquelles il est souhaitable d'obtenir une représentation de la distribution spatiale de particules chargées émergeant d'une surface, telles que par exemple les électrons émis par une couche radioactive formée par une coupe d'une préparation d'analyse biologique.

Divers dispositifs ont jusqu'ici été décrits permettant d'obtenir de telles représentations. Parmi ceux-ci on peut citer les demandes de brevet européen EP 0 395 510 et EP 0 376 762 dont l'inventeur est Monsieur Georges CHARPAK, lesquelles décrivent des systèmes basés sur le phénomène d'avalanche lumineuse.

De tels dispositifs donnent satisfaction. Toutefois, ces dispositifs, impliquant une détection optique du phénomène d'avalanche lumineuse précité, sont plus particulièrement destinés à une imagerie bidimensionnelle pour laquelle une résolution par points de surface de l'ordre de 0,01mm² est nécessaire.

La présente invention a, au contraire, pour objet un dispositif d'imagerie de particules ionisantes au moyen d'une chambre proportionnelle multifils permettant l'obtention d'une coordonnée dans une première direction du point d'entrée de toute particule ionisante, et donc du point d'émission sur la surface d'émission, avec une très grande précision et une résolution linéique inférieure ou égale à 100 µm.

Un autre objet de la présente invention est également la mise en oeuvre d'un dispositif d'imagerie de particules ionisantes au moyen d'une chambre proportionnelle multifils permettant, outre l'obtention d'une coordonnée dans une première direction du point d'entrée de toute particule ionisante, et donc du point d'émission sur la surface d'émission avec une très grande précision, l'obtention d'une coordonnée dans une deuxième direction orthogonale à la première direction avec une précision ou résolution linéique plus faible, le dispositif d'imagerie objet de la présente invention permettant une analyse de toute surface d'émission par bandes successives de résolution linéique maximale dans chaque bande d'analyse.

Le dispositif d'imagerie de particules ionisantes au moyen d'une chambre proportionnelle multifils, objet de la présente invention, est remarquable en ce que la chambre remplie d'un gaz présente une structure asymétrique et est formée successivement par une fenêtre d'entrée des particules ionisantes, portée à un premier potentiel électrique, négatif par rapport à un potentiel de référence, une électrode d'anode multifils portée à un deuxième potentiel, positif par rapport au potentiel de référence, pour créer entre la fenêtre d'entrée et l'électrode d'anode un champ électrique uniforme. Une électrode de cathode est placée au voisinage de l'électrode d'anode multifils, cette électrode de cathode étant portée au potentiel de référence et étant formée par une pluralité de bandes parallèles formant un réseau. L'induction d'une impulsion électrique provoquée par les électrons d'ionisation, issus de la particule ionisante au niveau de la bande située au droit de l'impact de la particule, permet de détecter la position d'impact de cette particule dans la direction du pas du réseau avec une résolution correspondante.

Le dispositif d'imagerie de particules ionisantes, objet de la présente invention, trouve application à l'analyse biologique ou médicale, par électrophorèse notamment.

Une description plus détaillée du dispositif d'imagerie de particules ionisantes, objet de la présente invention, sera maintenant donnée en liaison avec les dessins ci-après dans lesquels :
- la figure 1 représente une vue en coupe d'un dispositif d'imagerie de particules ionisantes conforme à l'objet de la présente invention,
- les figures 2a et 2b représentent un détail de réalisation du dispositif d'imagerie de particules ionisantes objet de l'invention représenté en figure 1, et un chronogramme de signaux obtenus en fonctionnement,
- la figure 3 représente un détail de réalisation avantageux non limitatif des électrodes d'anode et de cathode,
- la figure 4 représente une variante de réalisation non limitative de circuits électroniques de détection des impulsions,
- la figure 5 représente une variante particulière de mode de réalisation de circuits électroniques analogiques de détection des impulsions,
- la figure 6a représente, selon une vue en coupe, une variante de réalisation du dispositif d'imagerie de particules ionisantes objet de la présente invention, dans laquelle la fenêtre d'entrée est amovible, et
- la figure 6b représente un détail de réalisation de la figure 6a.

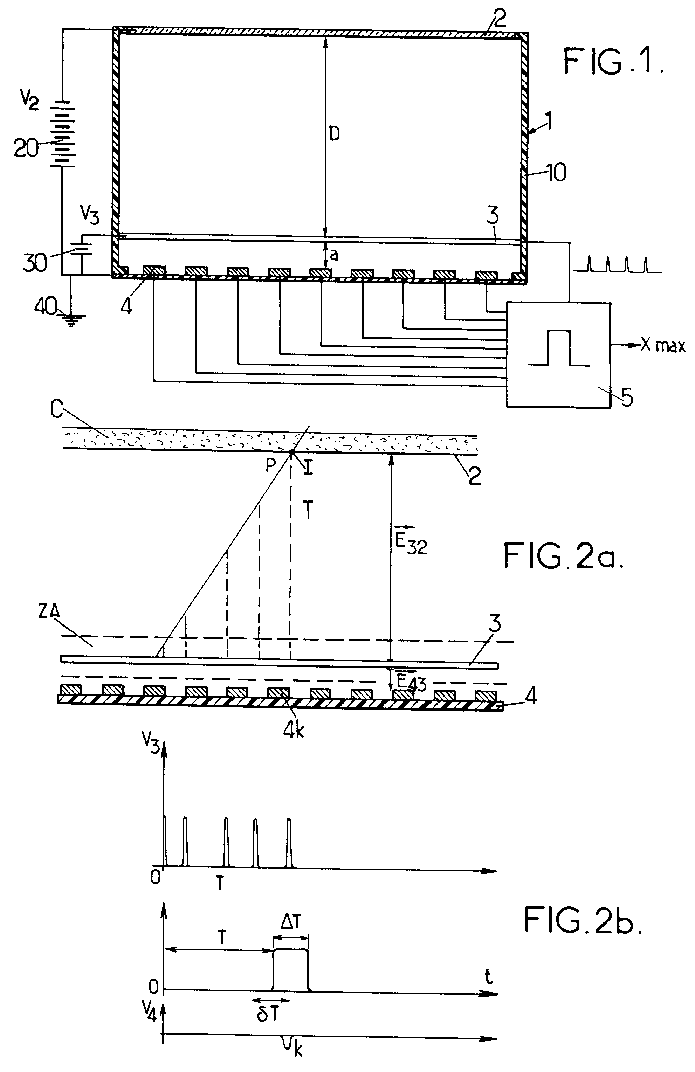

Une description plus détaillée d'un dispositif d'imagerie de particules ionisantes, conforme à l'objet de la présente invention, sera maintenant donnée en liaison avec la figure 1 et les figures suivantes.

Ainsi qu'on l'observera sur la figure 1 précitée, le dispositif d'imagerie de particules ionisantes, objet de la présente invention, comprend une chambre proportionnelle multifils, notée 1. Cette chambre comprend un corps de chambre, noté 10, formé par un boîtier étanche en un matériau plastique par exemple muni de blindages électrique et électromagnétique de type classique.

Selon une caractéristique particulièrement avantageuse du dispositif objet de la présente invention, la chambre 1 est remplie d'un gaz et présente une structure asymétrique formée successivement par une fenêtre d'entrée, notée 2, permettant l'entrée des particules ionisantes, cette fenêtre d'entrée étant sur une face de la chambre proprement dite. La fenêtre d'entrée 2 est portée à un premier potentiel électrique, noté V2, par un générateur de tension continue 20, ce premier potentiel étant négatif par rapport à un potentiel de référence. La fenêtre d'entrée 2 est suivie d'une électrode d'anode 3 multifils, c'est-à-dire une électrode d'anode formée par un alignement de fils, cette électrode 3 étant portée à un deuxième potentiel positif par rapport au potentiel de référence pour créer entre fenêtre d'entrée 2 et électrode d'anode 3 un champ électrique.

Enfin, une électrode de cathode 4 est placée au voisinage de l'électrode d'anode multifils 3, cette électrode de cathode 4 étant portée au potentiel de référence 40. On indique que l'électrode d'anode 3 est portée au deuxième potentiel V3 par l'intermédiaire d'un générateur de tension continue, noté 30.

Selon une caractéristique avantageuse du dispositif objet de la présente invention, l'électrode de cathode 3 est formée par une pluralité de bandes électriquement conductrices parallèles, formant un réseau, ce qui permet par induction d'une impulsion électrique provoquée par des électrons d'ionisation issus d'une particule ionisante, induction intervenant essentiellement au niveau de la bande située au droit de l'impact de cette particule sur la fenêtre 2, de détecter la position d'impact de cette particule dans la direction du pas du réseau avec une résolution linéique correspondante.

On indique alors que le dispositif, objet de la présente invention, permet, vis-à-vis des dispositifs de l'art antérieur précédemment cités, une construction simple dans la mesure où, tout dispositif de détection optique étant supprimé, une réduction de taille peut être facilement envisagée, alors que des fils de longue dimension, jusqu'à un mètre, peuvent être utilisés. En outre, dans la direction des fils, le long du pas du réseau, une bonne résolution est obtenue alors que, dans la direction perpendiculaire aux fils, une résolution correspondant sensiblement à la distance inter-fils peut être obtenue. Un tel dispositif est donc particulièrement bien adapté à l'électrophorèse sur gel à une dimension.

Dans un mode de réalisation avantageux du dispositif d'imagerie de particules ionisantes, objet de la présente invention, tel que représenté en figure 1, on indique que la détection de l'impulsion électrique induite au niveau d'une bande notée 4k de l'électrode de cathode 4, peut être effectuée par déclenchement de circuits électroniques 5 commandés par une impulsion de déclenchement retardée, d'une durée sensiblement égale ou légèrement inférieure d'une durée δT au temps de transit des électrons d'ionisation premièrement émis dans l'espace compris entre la fenêtre 2 et l'électrode d'anode 3.

Une description plus détaillée du mode de fonctionnement du dispositif d'imagerie de particules ionisantes, objet de la présente invention, sera maintenant donnée en liaison avec la figure 2a et la figure 2b.

D'une manière générale, on indique que le premier V2 et le deuxième V3 potentiels électriques sont choisis de façon que les champs électriques entre la fenêtre et l'électrode d'anode, champ électrique noté E32, sur la figure 2a, respectivement l'électrode d'anode et l'électrode de cathode, champ électrique noté E43 sur la figure précitée, aient sensiblement la même valeur absolue mais une direction opposée.

On indique en outre que les fils constitutifs de l'électrode d'anode 3 sont des fils rectilignes alignés dans une première direction, la direction horizontale dans le plan des figures 1, respectivement 2a, alors que les bandes, notées 4k, électriquement conductrices constitutives de la cathode 4, sont parallèles et alignées dans une direction perpendiculaire à celle des fils constitutifs de l'anode 3, c'est-à-dire dans une direction orthogonale au plan contenant les figures 1 et 2a.

Sur cette même figure 2a, on a représenté une coupe biologique C placée sur la fenêtre d'entrée 2, cette coupe étant radioactivement marquée à des fins d'analyses. Sur impact I d'une particule ionisante P, la particule P traverse, selon une trajectoire sensiblement rectiligne, l'espace compris entre la fenêtre d'entrée 2 et l'anode 3 pour atteindre l'anode 3 et en particulier la zone d'amplification proportionnelle, notée ZA, située au voisinage de chaque fil, constitutif de l'anode 3, en provoquant au sein du gaz contenu dans l'espace interélectrode une succession d'émission d'électrons d'ionisation. Le temps de déplacement de la particule P du point d'impact I jusqu'à l'électrode d'anode 3 est négligeable en raison de la haute vitesse, vitesse relativiste, de la particule ionisante P émise et les électrons d'ionisation, successivement émis par la particule P sur son trajet, sont accélérés par le champ électrique E32, ce temps de transit étant proportionnel à la distance séparant le point d'émission des électrons d'ionisation de l'électrode 3. Ainsi, en raison du temps très bref de déplacement de la particule P, les électrons d'ionisation émis au voisinage de l'électrode 3 par la particule précitée, et notamment au voisinage de la zone d'amplification proportionnelle ZA, peuvent-ils constituer une référence d'origine de temps d'entrée de la particule dans l'espace interélectrode constitué par la fenêtre d'entrée 2 et l'anode 3, pour les électrons d'ionisation antérieurs dont l'impact sur l'électrode d'anode 3 se produit successivement avec un retard proportionnel à la distance séparant le point d'émission effectif sur la trajectoire de la particule de l'électrode d'anode 3.

Ces émissions successives d'électrons d'ionisation se traduisent alors sur l'électrode d'anode 3 par une série d'impulsions représentées en figure 2b, impulsions d'amplitude sensiblement voisines, la dernière impulsion provoquée sur l'électrode d'anode 3 présentant le retard T le plus important par rapport à l'impulsion d'origine et correspondant au temps de transit des électrons d'ionisation émis au niveau de l'impact I de la particule sur la fenêtre d'entrée 2.

Ainsi, le déclenchement des circuits électroniques 5 par une impulsion de commande retardée par rapport à l'origine d'une durée sensiblement égale ou légèrement inférieure d'une durée δT au temps de transit des électrons d'ionisation premièrement émis dans l'espace compris entre la fenêtre et l'électrode d'anode permet-il de localiser effectivement, grâce à une impulsion correspondante induite sur l'électrode 4 et en particulier sur la bande électriquement conductrice, notée 4k, située au droit des électrons d'ionisations premièrement émis au niveau de l'impact I, de déterminer, dans la direction du pas du réseau constitué par les bandes électriquement conductrices précitées, la coordonnée correspondante du point d'impact précédemment mentionné. Sur la figure 2b on a représenté l'impulsion apparaissant sur la bande électriquement conductrice concernée, cette impulsion induite par couplage électrostatique des charges de l'avalanche produite sur l'électrode d'anode 3 avec l'électrode de cathode 4 présentant une polarité opposée à celle provoquée par les charges de l'avalanche sur l'électrode d'anode 3.

D'une manière générale, on indique que le temps de transit T des électrons d'ionisation premièrement émis a une valeur fixe en fonction des paramètres géométriques de la chambre, de la valeur du champ électrique E32 ainsi que de la nature du gaz remplissant la chambre multifils proportionnelle utilisée. On indique toutefois que ce temps fixe peut être ajustable par modification de l'un des paramètres précités et notamment de la valeur du champ électrique E32 précédemment mentionné. A titre d'exemple non limitatif, une variation du temps de transit T peut être réalisée pour obtenir un temps de transit compris entre 50 et 500 nanosecondes.

En ce qui concerne l'impulsion de commande retardée permettant la sélection des électrons d'ionisation premièrement émis et donc représentatifs du point d'impact I de la particule ionisante P, on indique que cette impulsion de commande peut être réalisée par une impulsion logique de durée ΔT déterminée. A titre d'exemple non limitatif, la durée ΔT peut être prise égale à 5 nanosecondes, une telle précision dans le front de montée de l'impulsion de commande retardée précitée correspondant sensiblement à une précision de 150 micromètres dans le choix de la tranche gaz au voisinage de la fenêtre d'entrée 2 qui contribue aux impulsions effectivement détectées, lorsque le temps de retard T choisi correspond à un temps de transit T=150 nanosecondes.

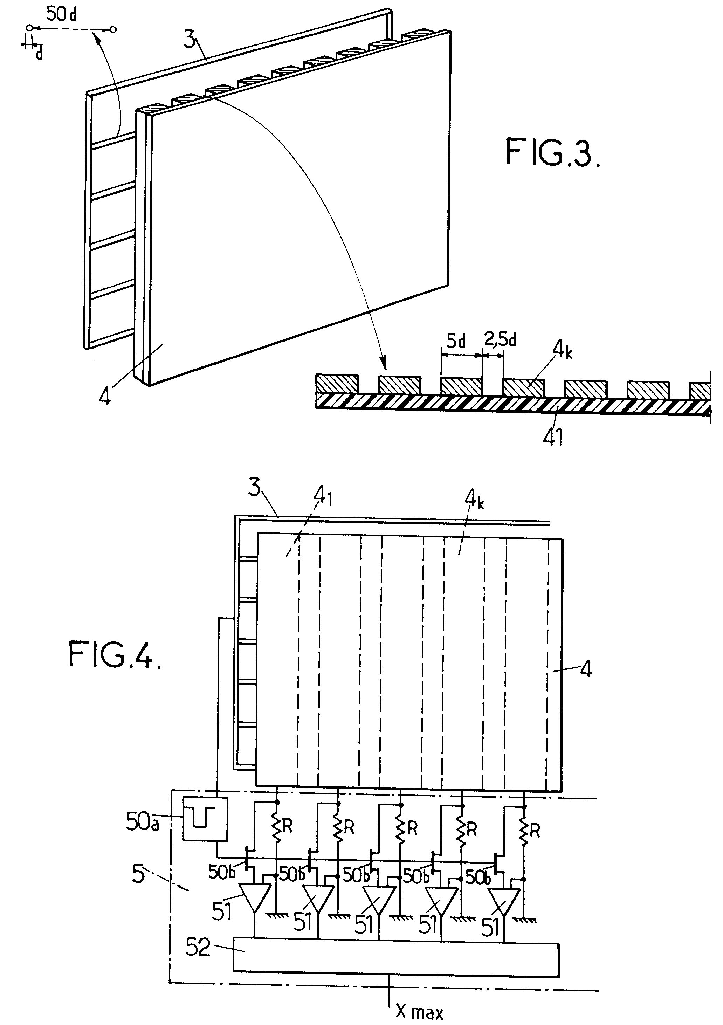

Différentes caractéristiques d'exécution du dispositif d'imagerie de particules ionisantes, objet de la présente invention, seront maintenant données en liaison avec la figure 3 et les figures suivantes.

En référence à la figure précitée on indique que l'électrode d'anode multifils 3 peut être formée par un alignement de fils parallèles électriquement conducteurs formant réseau dont le rapport cyclique spatial noté r peut être pris égal à 1/50. Ainsi, pour des fils de diamètres d, l'espacement entre les fils peut être pris égal à 50d. Dans un mode de réalisation d'exécution, les fils peuvent présenter un diamètre d = 20 micromètres, ces fils étant alors espacés de 1mm.

En outre, ainsi qu'on l'a représenté sur la même figure 3, l'électrode de cathode peut être formée par des bandes électriquement conductrices parallèles de façon à former un réseau de rapport cyclique spatial R = 2. Dans un mode de réalisation non limitatif, on indique que pour des fils constitutifs de l'anode 3 de diamètre d, les bandes conductrices présentaient une largeur 5d et étaient espacées d'une distance 2,5d.

On indique enfin que l'électrode d'anode 3 était espacée de la fenêtre d'entrée 2 d'une distance D, laquelle était prise égale, dans le mode de réalisation précité, à 3mm.

L'électrode de cathode 4, au contraire, peut être placé à une distance a sensiblement égale au 1/10 de la distance D séparant l'électrode d'anode 3 de la fenêtre d'entrée 2. On indique en particulier que l'électrode de cathode 4 peut être réalisée par des bandes métalliques parallèles notées 4k déposées sur une plaque ou feuille en matériau isolant 41, l'ensemble étant obtenu selon une technique comparable à la technique de masquage des circuits intégrés.

Dans l'exemple de réalisation précédemment décrit et pour D=3mm et a=0,3mm, le gaz utilisé étant un gaz tel que l'argon et un faible pourcentage de méthane, tout autre gaz de type classique, tel qu'un gaz noble et une vapeur organique, utilisé dans les chambres multifils proportionnelles pouvant d'ailleurs être utilisé, le premier potentiel V2 avait pour valeur -2400 volts et le deuxième potentiel V3 avait pour valeur +240 volts.

Compte tenu des éléments précédemment mentionnés, la lecture des impulsions induites sur les bandes 4k de l'électrode 4 doit être effectuée au moyen d'un système de lecture électronique rapide.

Dans un mode de réalisation non limitatif représenté en figure 4, chaque banque électriquement conductrice 4k formant l'électrode de cathode 4 peut être reliée au potentiel de référence par l'intermédiaire d'une impédance ou résistance R de forte valeur plusieurs mégohms.

En outre, chaque bande électriquement conductrice 4k est reliée à un circuit amplificateur à grand gain, noté 51, et à forte impédance d'entrée par l'intermédiaire d'un circuit interrupteur commandé 50b, par exemple, le circuit interrupteur commandé étant électriquement relié à l'électrode d'anode par l'intermédiaire du circuit retardateur 50a dont le délai de retard correspond au temps de transit des électrons d'ionisation premièrement émis dans l'espace fenêtre-électrode d'anode, diminué par exemple d'une durée δT ajustable qui permet de choisir la bande de gaz sensible près de la fenêtre d'entrée. On indique bien sûr que les circuits 50a et 50b peuvent être réalisés par un circuit logique, la représentation de la figure 4 correspondant à une logique positive, dans laquelle le circuit interrupteur 50b est connecté en série avec l'entrée de l'amplificateur relié à la bande électriquement conductrice 4k correspondante. On indique qu'un circuit de commande à logique négative peut également être utilisé et, dans un tel cas, le circuit interrupteur 50b peut avantageusement être monté en parallèle entre la borne d'entrée de l'amplificateur 51 reliée à la bande électriquement conductrice 4k et le potentiel de référence. Le circuit retardateur 50a peut être réalisé par exemple au moyen d'un circuit logique de commande de type monostable.

On indique également que dans le cas où un amplificateur 51 à forte impédance d'entrée est utilisé, la résistance R peut être supprimée.

Ainsi qu'on l'a également représenté sur la figure 4, chaque amplificateur 51, associé à une bande électriquement conductrice 4k correspondante, est connecté à un circuit de traitement 52, lequel permet de déterminer l'ordre k de la bande électriquement conductrice siège de l'impulsion induite, laquelle est ainsi détectée. A titre d'exemple non limitatif, on indique que le circuit 52 peut être constitué par un circuit échantillonneur rapide lequel peut permettre alors soit un traitement numérique des impulsions, soit un traitement analogique en tenant compte notamment de processus d'interpolation sur l'amplitude des impulsions détectées.

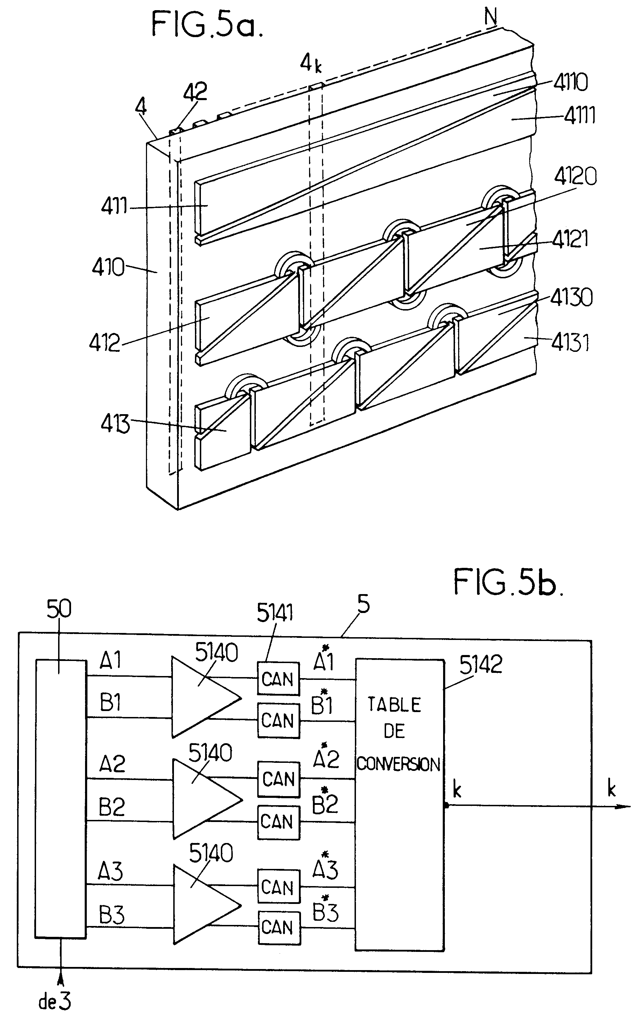

En ce qui concerne un traitement analogique des impulsions, on indique en référence avec les figures 5a et 5b que la détection peut être effectuée à partir d'un circuit de détection spécifique constitué par un circuit électrostatique représenté sur la figure 5a consistant en un couplage capacitif avec chaque bande 4k de rang k déterminé.

Le circuit de détection électrostatique comporte au moins, ainsi que représenté sur la figure précitée, une première bande, notée 411, électriquement conductrice, cette bande conductrice étant subdivisée selon un motif périodique en deux bandes élémentaires 4110, 4111 dont le couplage électrostatique à chaque bande 4k est une fonction croissante, respectivement décroissante du rang k de la bande considérée. Un circuit représenté en figure 5b permet de mesurer l'amplitude du signal d'extrémité engendré en extrémité de la première et de la deuxième bande élémentaire, ainsi que du rapport des signaux d'extrémité, ce rapport étant représentatif du rang k de la bande au voisinage de laquelle les électrons d'ionisation ont induit l'impulsion électrique correspondante.

On indique, en outre, que une deuxième bande 412 peut être prévue, bande électriquement conductrice, cette deuxième bande étant subdivisée en une première 4120 et une deuxième 4121 bande élémentaire selon un même motif périodique, de période multiple de la première bande électriquement conductrice dans un rapport donné.

Le circuit représenté en figure 5b permet la mesure de l'amplitude des signaux engendrés par couplage capacitif en extrémité de la première et de la deuxième bande élémentaire et du rapport de l'amplitude de ces signaux d'extrémité. La première et la deuxième bande électriquement conductrice, associées le cas échéant à une troisième bande 413 elle-même subordonnée en deux bandes élémentaires 4130, 4131, forment ainsi un système de mesurage de type vernier du rang k de la bande électriquement conductrice 4k située sensiblement au droit des électrons d'ionisation premièrement émis.

En figure 5b, 50 désigne un circuit logique analogue aux circuits 50a, 50b de la figure 5a, 5140 désigne des circuits amplificateurs, 5141 des circuits convertisseurs analogiques numériques et 5142 une table de conversion permettant de délivrer le rang k de la bande 4k sur laquelle l'impulsion a été détectée.

Pour une description plus détaillée du fonctionnement du système de détection électrostatique représenté en figure 5a et 5b on pourra utilement se reporter à la demande de brevet français n° 2 680 010.

On indique également que le temps de retard de commande de lecture des impulsions induites sur les bandes électriquement conductrices 4k correspondantes peut en outre être ajusté ainsi que le temps de lecture de ces impulsions, la porte logique et en particulier le front montant de l'impulsion de commande de lecture des impulsions sur les bandes et la durée de lecture pouvant ainsi être modulés, de façon à effectuer une lecture de toutes les impulsions présentes sur chaque bande. Il est alors possible de déterminer le centroïde des amplitudes des impulsions engendrées par les électrons d'ionisation libérés à l'entrée de la chambre multifils, c'est-à-dire à l'impact des particules sur la fenêtre d'entrée. Le traitement peut alors être effectué de manière numérique après échantillonnage des impulsions sur les différentes bandes.

On indique également que, bien entendu, les dimensions relatives et espaces séparant les différentes électrodes peuvent être modifiés, pourvu que le caractère asymétrique de la chambre soit maintenu, la distance séparant la cathode 4 de l'électrode d'anode 3 pouvant être prise égale par exemple à 0,5mm. Il est alors possible de mesurer sur les bandes électriquement conductrices 4k la hauteur de l'impulsion induite par les avalanches produites par les électrons retardés venant de la fenêtre d'entrée de la chambre et le calcul du centroïde de ces amplitudes permet alors de déterminer la position des électrons d'ionisation premièrement émis le long du fil avec une précision de l'ordre de 100 micromètres.

En ce qui concerne les domaines d'application du dispositif d'imagerie de particules ionisantes objet de la présente invention, on indique que celui-ci peut avantageusement être appliqué à l'analyse par électrophorèse à une dimension, l'électrode d'anode 3 pouvant alors être subdivisée en une pluralité d'électrodes d'anode élémentaires regroupant quatre à cinq fils en parallèle, ces électrodes élémentaires étant successivement superposés pour réaliser une pluralité d'analyses par électrophorèse superposées dans une direction perpendiculaire à la direction d'alignement des fils.

On indique, enfin, que le caractère asymétrique de la chambre multifils résultant de la disparité des distances séparant la fenêtre d'entrée 2 et l'électrode d'anode 3, d'une part, et l'électrode d'anode 3 et l'électrode de cathode 4, d'autre part, permet, en raison du couplage des charges de l'avalanche entre l'électrode de cathode 4 et l'électrode d'anode 3, d'effectuer ainsi la détection des impulsions induites sur les bandes électriquement conductrices parallèles constitutives de la cathode 4.

Un des problèmes dû à la distance très faible entre l'électrode de cathode 4 et l'électrode d'anode 3 susceptible d'apparaître est le déplacement des fils de l'électrode d'anode 3 attirés par les forces électrostatiques vers l'électrode de cathode 4. Un tel phénomène est susceptible de provoquer une variation de gain le long de chaque fil. Un tel phénomène peut être corrigé en plaçant les bandes électriquement conductrices 4k à des potentiels légèrement variables compensant cette attraction. Dans un tel cas, la polarisation des bandes peut être effectuée à partir des résistances R précédemment mentionnées et de générateurs auxiliaires non représentés au dessin, la liaison aux amplificateurs 51 étant alors effectuée par l'intermédiaire d'une liaison capacitive.

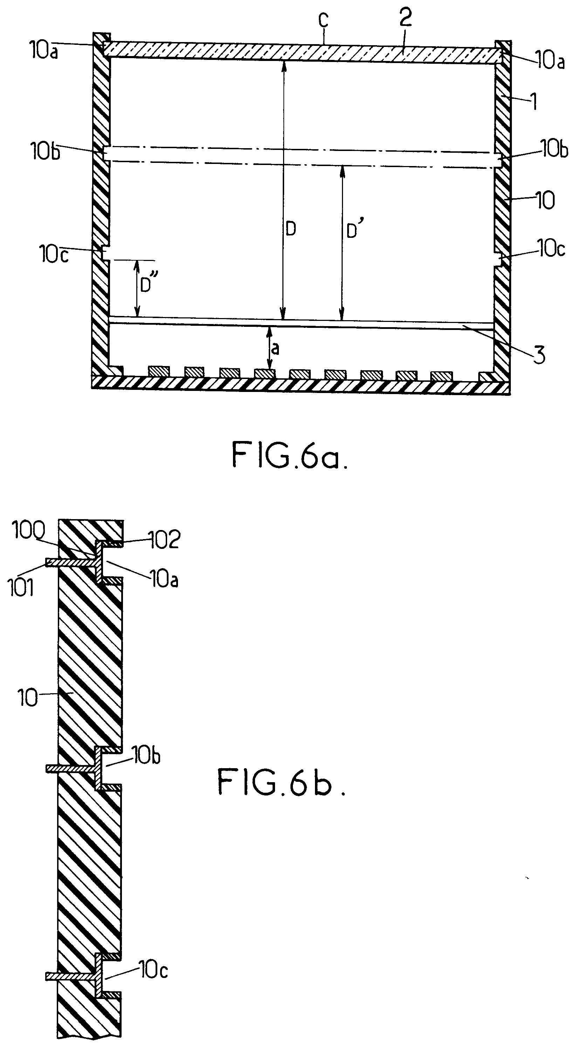

Une variante avantageuse d'un dispositif d'imagerie de particules ionisantes conforme à l'objet de la présente invention sera maintenant décrite en liaison avec les figures 6a et 6b.

Selon la figure 6a précitée, le dispositif, objet de la présente invention, dans une variante de réalisation avantageuse, est tel que la fenêtre d'entrée 2 des particules ionisantes est amovible. Une telle caractéristique permet de créer différents espaces électrode d'anode 3-fenêtre d'entrée 2, ce qui permet pour différentes valeurs de la distance D séparant l'électrode d'anode de la fenêtre d'entrée et pour différents gaz remplissant la chambre proportionnelle et en particulier l'espace entre l'électrode d'anode 3 et la fenêtre d'entrée 2, le caractère asymétrique de la chambre étant conservé, d'effectuer une imagerie d'un même objet marqué par des éléments radioactifs différents selon des images élémentaires différentes.

Sur la figure 6a, on a représenté le corps de chambre 10 présentant différents emplacements 10a, 10b et 10c destinés à recevoir la fenêtre d'entrée 2 amovible. Cette dernière peut ainsi être placée au niveau des emplacements 10a, 10b et 10c de façon à ménager des distances D, D' ou D'' séparant l'électrode d'anode 3 de la fenêtre d'entrée 2 de différente valeur. Bien entendu, le caractère asymétrique de la chambre est ainsi conservé, ce qui permet d'effectuer une imagerie d'un même objet noté C, C représentant une coupe biologique par exemple, cet objet C étant marqué par des éléments radioactifs différents.

On comprend en particulier que pour différentes valeurs D, D', D'' séparant la fenêtre d'entrée 2 de l'électrode d'anode 3, il est ainsi possible, pour différents gaz par exemple, différents gaz permettant d'obtenir une absorption différente des particules radioactives émises par les différents éléments radioactifs, d'obtenir, pour une position déterminée de la fenêtre d'entrée 2, et du corps à analyser C correspondant, différentes images élémentaires lesquelles sont représentatives de l'émission d'un ou plusieurs éléments radioactifs de marquage ainsi qu'il sera décrit ci-après dans la description.

Le mode opératoire du dispositif d'imagerie tel que représenté en figure 6a est le suivant.

La distance D, D', D'' peut être choisie de façon que certains radio-éléments de marquage émettent un rayonnement qui n'atteint pas les fils de l'électrode d'anode 3 pour un gaz donné. On comprend bien sûr que pour le gaz considéré, les rayonnements qui n'atteignent pas les fils sont ainsi absorbés par ce dernier.

Il est donc possible de marquer un échantillon C avec deux isotopes radioactifs par exemple, notés I1 et I2.

L'isotope I1 peut émettre un rayonnement mou alors que l'isotope I2 peut émettre un rayonnement énergétique.

Il est alors possible d'effectuer les mesures et la détection d'image avec un gaz lourd, noté G1, ce gaz lourd remplissant la chambre et en particulier l'espace entre la fenêtre d'entrée 2 et l'électrode d'anode 3. Ce gaz lourd arrête les particules β émises par l'élément radioactif 11, sans toutefois arrêter les particules β émises par l'élément radioactif 12. La mesure ou la détection peut ensuite être effectuée avec un gaz léger, noté G2, lequel laisse passer sans atténuation rédhibitoire les particules émises par les éléments radioactifs I1 et I2.

Une comparaison des deux images élémentaires obtenues lors des deux détections permet de déterminer la contribution relative de l'élément radioactif de marquage I1 et de l'élément radioactif de marquage I2.

A titre d'exemple non limitatif, on indique :
- l'élément radioactif de marquage I1 peut être constitué par le tritium, le gaz remplissant la chambre étant par exemple un gaz noble, tel que le xénon, et la distance étant choisie égale à D'=2mm ce qui permet d'arrêter les particules β émises par l'élément de marquage précité constitué par le tritium, le deuxième élément de marquage étant par exemple le phosphore, lequel traverse pratiquement sans absorption cette épaisseur de xénon.

Le deuxième gaz choisi G2 peut alors être constitué par l'hélium.

On indique également que le premier élément radioactif de marquage peut être constitué par l'isotope 35 du soufre S³⁵ alors que le deuxième élément radioactif de marquage peut également être constitué par l'isotope 32 du phosphore, P³². Dans un tel cas, la distance D peut être prise égale à 1,5 cm. Le rayonnement du soufre est très absorbé par le xénon contrairement à celui émis par l'isotope 32 du phosphore. On indique en outre que, même dans le cas où l'absorption des particules β de l'élément radioactif de marquage I1 n'est pas totale, la comparaison des deux images élémentaires permet de calculer la contribution relative de chaque élément de marquage I1 et I2.

En ce qui concerne la réalisation pratique du dispositif objet de la présente invention, telle que représentée en figure 6a, on indique, en relation avec la figure 6b que chaque emplacement 10a, 10b et 10c peut comprendre une rainure destinée à recevoir la fenêtre d'entrée amovible 2, cette rainure comportant essentiellement une semelle métallique conductrice 100 en fond de rainure, reliée à un plot de contact 101, lequel est destiné à recevoir la tension de polarisation V2 permettant d'assurer la polarisation convenable de la fenêtre d'entrée 2. En outre, ainsi que représentées en figure 6b, les parois latérales autres que la paroi de fond de la rainure constitutive de chaque emplacement 10a, 10b ou 10c, peut alors comprendre un revêtement 102 lequel est bien entendu un revêtement isolant destiné à assurer une étanchéité suffisante de la chambre vis-à-vis du gaz destiné à remplir celle-ci. On indique que le revêtement 102 peut être réalisé par exemple par un revêtement en polytétrafluoréthylène. La fenêtre d'entrée 2 est alors insérée à force dans les emplacements 10a correspondant, ou 10b, 10c, de façon à obtenir la valeur de la distance D, D', D'' choisie. On indique en ce qui concerne l'étanchéité que celle-ci doit permettre au plus de supporter une pression interne du gaz dans la chambre de l'ordre de 1,5 bar, l'alimentation de la chambre en gaz correspondant étant effectuée, pendant le fonctionnement, en légère surpression par rapport à la pression atmosphérique.

Le mode opératoire du dispositif d'imagerie objet de la présente invention tel que décrit en liaison avec la figure 6a permet alors la mise en oeuvre d'un procédé d'imagerie de particules ionisantes particulièrement attractif dans la mesure où le corps à analyser C étant marqué par une pluralité d'éléments radioactifs distincts émettant des particules ionisantes de niveaux d'énergie différents, ce procédé consiste à effectuer une détection de la position d'impact des particules émises par un élément radioactif en présence d'un gaz dans l'espace fenêtre d'entrée-électrode d'anode, pour une distance D séparant la fenêtre d'entrée de l'électrode d'anode pour obtenir une image élémentaire, puis à effectuer une détection successive de la position d'impact des particules émises par au moins un autre élément radioactifs en présence d'un autre gaz différent dans l'espace fenêtre d'entrée-électrode d'anode pour obtenir une autre image élémentaire. Un tel mode opératoire permet alors par analyse comparative des images élémentaires précitées, de déterminer la contribution relative des éléments radioactifs.

On comprend bien sûr que le nombre d'éléments radioactifs de marquage ou isotopes différents peut être supérieur à deux et qu'en conséquence il est possible d'effectuer des détections successives de façon à chaque détection d'obtenir une image élémentaire constituée par exemple par la contribution d'un isotope de marquage déterminé.

On indique alors, conformément à un aspect particulièrement avantageux du procédé objet de la présente invention, que la ou les détections successives sont effectuées pour différentes valeurs de distance D', D'' séparant la fenêtre d'entrée 2 de l'électrode d'anode 3.

En ce qui concerne, enfin, les applications du dispositif d'imagerie de particules ionisantes objet de la présente invention, on indique que les particules ionisantes détectées peuvent être celles correspondant à un rayonnement β ou celles correspondant à l'émission de neutrons lents. Dans ce dernier cas, on indique qu'il est possible d'utiliser au voisinage de l'électrode d'anode 3 une feuille de gadolinium permettant l'émission d'un électron local chaque fois qu'un neutron lent est absorbé. On comprend bien sûr que toute couche qui présente un coefficient d'émission d'électrons secondaires élevé par des rayons β énergiques peut être avantageusement utilisée pour l'imagerie des rayons β. On indique également qu'une imagerie de neutrons lents peut être effectuée à partir d'une couche de bore permettant l'émission d'une particule a chaque fois qu'un neutron lent est absorbé par la couche de bore précitée.

## Revendications

1. Dispositif d'imagerie de particules ionisantes, au moyen d'une chambre proportionnelle multifils, caractérisé en ce que ladite chambre remplie d'un gaz présente une structure asymétrique formée successivement par :
- une fenêtre d'entrée des particules ionisantes, portée à un premier potentiel électrique, négatif par rapport à un potentiel de référence,
- une électrode d'anode multifils portée à un deuxième potentiel positif par rapport audit potentiel de référence pour créer, entre fenêtre d'entrée et électrode d'anode, un champ électrique,
- une électrode de cathode placée au voisinage de ladite électrode d'anode multifils, ladite électrode de cathode, portée au potentiel de référence, étant formée par une pluralité de bandes électriquement conductrices parallèles formant un réseau, ce qui permet par induction d'une impulsion électrique provoquée par des électrons d'ionisation issus de la particule ionisante au niveau de la bande, par l'intermédiaire d'une avalanche située au droit de l'impact de ladite particule, de détecter la position d'impact de cette particule dans la direction du pas du réseau avec une résolution correspondante.

2. Dispositif selon la revendication 1, caractérisé en ce que le premier et le deuxième potentiel électrique sont choisis de façon que les champs électriques entre la fenêtre et l'électrode d'anode, respectivement l'électrode d'anode et l'électrode de cathode aient sensiblement la même valeur absolue.

3. Dispositif selon la revendication 1, caractérisé en ce que ladite électrode d'anode multifils est formée par un alignement de fils parallèles formant réseau, de rapport cyclique spatial r = 1/50, ladite électrode de cathode étant formée par des bandes parallèles perpendiculaires aux fils de l'électrode d'anode, formant un réseau de rapport cyclique spatial R = 2, ladite électrode d'anode étant formée par des fils conducteurs de diamètre d, espacés d'une distance 50d, et ladite électrode de cathode étant formée par des bandes conductrices de largeur 5d espacées d'une distance 2,5d, ladite électrode d'anode étant espacée de la fenêtre d'entrée d'une distance D et l'électrode de cathode étant espacée de l'électrode d'anode d'une distance D/10.

4. Dispositif selon l'une des revendications 1 à 3, caractérisé en ce que la détection de ladite impulsion électrique est effectuée par déclenchement de circuits électroniques commandés par une impulsion de déclenchement retardée d'une durée sensiblement égale au temps de transit des électrons d'ionisation premièrement émis dans l'espace compris entre la fenêtre et l'électrode d'anode.

5. Dispositif selon la revendication 4, caractérisé en ce que l'impulsion de déclenchement est retardée d'une durée égale au temps de transit des électrons diminuée d'une durée ajustable δT permettant de choisir la bande de gaz sensible près de la fenêtre d'entrée.

6. Dispositif selon la revendication 4 ou 5, caractérisé en ce que chaque bande électriquement conductrice formant ladite électrode de cathode est reliée au potentiel de référence par l'intermédiaire d'une impédance de forte valeur.

7. Dispositif selon la revendication 6, caractérisé en ce que chaque bande électriquement conductrice est reliée à un circuit amplificateur à grand gain et forte impédance d'entrée, par l'intermédiaire d'un circuit interrupteur commandé, le circuit interrupteur étant électriquement relié à ladite électrode d'anode par l'intermédiaire d'un circuit retardateur dont le délai de retard correspond sensiblement au temps de transit des électrons d'ionisation premièrement émis dans l'espace fenêtre électrode d'anode.

8. Dispositif selon l'une des revendication 1 à 7, caractérisé en ce que le gaz remplissant les espaces inter-électrodes est un gaz appartenant au groupe argon et méthane, gaz noble et vapeur organique.

9. Dispositif selon l'une des revendications précédentes, caractérisé en ce que ladite fenêtre d'entrée des particules ionisantes est amovible, de façon à créer différents espaces électrode d'anode-fenêtre d'entrée, ce qui permet, pour différentes valeurs de la distance D séparant électrode d'anode-fenêtre d'entrée et/ou pour différents gaz, le caractère asymétrique de la chambre étant conservé, d'effectuer une imagerie d'un même objet marqué par des éléments radioactifs différents selon des images élémentaires différentes.

10. Procédé d'imagerie de particules ionisantes issues d'un corps radioactivement marqué, au moyen d'un dispositif d'imagerie selon la revendication 1 ou 9, caractérisé en ce que ledit corps étant marqué par une pluralité d'éléments radioactifs distincts émettant des particules ionisantes, de niveau d'énergie différent, ledit procédé consiste :
- à effectuer une détection de la position d'impact des particules émise par un élément radioactif, en présence d'un gaz dans l'espace fenêtre d'entrée-électrode d'anode, pour une distance D séparant le fenêtre d'entrée de l'électrode d'anode pour obtenir une image élémentaire,
- à effectuer une détection successive de la position d'impact des particules émises par au moins un autre élément radioactif en présence d'un autre gaz différent dans l'espace fenêtre d'entrée-électrode d'anode pour obtenir une autre image élémentaire, ce qui permet par analyse comparative desdites images élémentaires de déterminer la contribution relative desdits éléments radioactifs.

11. Procédé d'imagerie selon la revendication 10, caractérisé en ce que la ou lesdites détections successives sont en outre effectuées pour différentes valeurs de distance (D', D''...) séparant la fenêtre d'entrée de l'électrode d'anode.
